# EUROPÄISCHE PATENTSCHRIFT

(11) **EP 2 715 336 B1**
(45) Veröffentlichungstag und Bekanntmachung des Hinweises auf die Patenterteilung: **20.01.2016**
(21) Anmeldenummer: 12722730.4
(22) Anmeldetag: 21.05.2012
(51) Int. Cl.: G01N 29/024, G01N 29/32, G01N 29/27, F01N 3/20, F01N 11/00

(54) **VERFAHREN UND VORRICHTUNG ZUM BETREIBEN EINES SCR-SYSTEMS**
METHOD AND DEVICE FOR OPERATING AN SCR SYSTEM
PROCÉDÉ ET DISPOSITIF POUR FAIRE FONCTIONNER UN SYSTÈME SCR

(30) Priorität: 26.05.2011 DE 102011103272
(43) Veröffentlichungstag der Anmeldung: 09.04.2014
(73) Patentinhaber: Continental Automotive GmbH, 30165 Hannover (DE)
(72) Erfinder: GRASS, Philippe, 93053 Regensburg (DE); SCHÄDLICH, Denny, 08223 Neustadt (DE)
(86) Internationale Anmeldenummer: PCT/EP2012/059322
(87) Internationale Veröffentlichungsnummer: WO 2012/160009

(56) Entgegenhaltungen:
- EP-A2- 2 343 548
- WO-A2-02/04916
- WO-A2-2007/104779
- DE-A1-102006 013 263

## Beschreibung

Die Erfindung betrifft ein Verfahren und eine Vorrichtung zum Betreiben eines SCR-Systems in einer Brennkraftmaschine.

Im Rahmen strenger gesetzlicher Vorschriften bezüglich der von Kraftfahrzeugen emittierten Schadstoffemissionen ist eine wichtige Maßnahme, Schadstoffemissionen gering zu halten, die während der Verbrennung des Luft/Kraftstoff-Gemisches in dem jeweiligen Zylinder der Brennkraftmaschine entstehen.

Eine weitere Maßnahme ist, auch Abgasnachbehandlungssysteme einzusetzen, die die Schadstoffemissionen, die während des Verbrennungsprozesses des Luft/Kraftstoff-Gemisches in dem jeweiligen Zylinder erzeugt werden, in unschädliche Stoffe umwandeln. Zu diesem Zweck werden Abgaskatalysatoren eingesetzt, die Kohlenmonoxid, Kohlenwasserstoff und auch Stickoxide in unschädliche Stoffe umwandeln. Insbesondere im Zusammenhang mit Diesel-Brennkraftmaschinen werden beispielsweise Partikelfilter eingesetzt und auch SCR (selective catalytic reduction) Katalysatoren eingesetzt. Solche SCR-Katalysatoren reduzieren selektiv die Stickoxide. Dies bedeutet, dass insbesondere Stickoxide wie NO, NO₂ reduziert werden, wohingegen unerwünschte Nebenreaktion vermieden werden. Für diese Reaktion wird Ammoniak (NH₃) benötigt.

Bei SCR-Systemen, umfassend einen SCR-Katalysaitor, wird im Kraftfahrzeugbereich ein Reduktionsmittel in den Abgasstrang zugemessen. Als Reduktionsmittel wird geruchloser Harnstoff eingesetzt, da Ammoniak in Reinform eine hohe Toxizität aufweist und zudem entzündlich ist. Als Reduktionsmittel wird als wässrige Harnstofflösung zur Verfügung gestellt, die auch unter dem Markennamen AdBlue^{®} vertrieben wird. Das Reduktionsmittel ist regelmäßig in einem separaten Tank in dem Fahrzeug gespeichert. Der Verbrauch des Reduktionsmittels beträgt zwischen 2 bis in etwa 8 % des Kraftstoffs, insbesondere des Dieselkraftstoffs.

Um eine möglichst starke Verminderung der Stickoxidemissionen zu erreichen, ist es wichtig, dass das Reduktionsmittel im richtigen Verhältnis dosiert wird. Bei zu geringer Dosierung sinkt der Wirkungsgrad der Stickoxidverringerung. Ist der Harnstoffanteil zu hoch, so kann das daraus gebildete Ammoniak teilweise nicht mit den Stickoxiden reagieren.

DE 10 2006 013 263 A1 offenbart ein Verfahren zur Bestimmung der Konzentration eines Bestandteils einer zur Abgasreinigung vorgesehenen Flüssigkeit, bei dem eine Konzentration des Bestandteils in der Flüssigkeit mittels einer Messung der Schallgeschwindigkeit in der Flüssigkeit ermittelt wird.

WO 2007/104779 A2 offenbart ein Verfahren zur Überprüfung einer Zusammensetzung einer Ammoniak-Lösung, bei dem ein Referenztemperaturverlauf aufgezeichnet wird und ein Testtemperaturverlauf mit dem Referenztemperaturverlauf verglichen wird.

Das "Handbuch der Messtechnik", 2007, Carl Hanser Verlag, München, ISBN: 978-3-446-40750-3; Bd. 2, Seiten 248-249 offenbart eine Verwendung von Dichtemessgeräten zur Konzentrationsbestimmung mithilfe von Dichte und Ultraschall.

Die Aufgabe, die der Erfindung zugrunde liegt, ist es, ein Verfahren und eine Vorrichtung zum Betreiben eines SCR-Systems zu schaffen, das beziehungsweise die eine zuverlässige Ermittlung einer Konzentration an Harnstoff ermöglicht.

Die Aufgabe wird gelöst durch die Merkmale der unabhängigen Ansprüche. Vorteilhafte Ausgestaltungen sind in den Unteransprüchen gekennzeichnet.

Die Erfindung zeichnet sich aus durch ein Verfahren und eine entsprechende Vorrichtung zum Betreiben eines SCR-Systems mit einer Harnstofflösungszufuhr und mit einem ultraschallbasierten Harnstoffkonzentrationssensor, dessen Messsignal repräsentativ ist für eine Laufzeit eines Ultraschallpulses entlang einer vorgegebenen Weglänge in einem Fluid der Harnstoff lösungszufuhr.

Zumindest das Fluid in einem Erfassungsbereich des Harnstoffkonzentrationssensors wird von einer ersten Temperatur auf eine vorgegebene zweite Temperatur aufgeheizt. Während des Aufheizens wird bei zumindest einer dritten und von der dritten verschiedenen vierten Temperatur das Messsignal erfasst und jeweils ein Roh-Konzentrationskennwert abhängig von dem jeweiligen Messsignal ermittelt, der repräsentativ ist für die Laufzeit des Ultraschallpulses. Beispielsweise kann die dritte Temperatur der ersten Temperatur in etwa entsprechen und die vierte Temperatur der zweiten Temperatur in etwa entsprechen.

Abhängig von den Roh-Konzentrationskennwerten wird ein Konzentrationskennwert ermittelt, der repräsentativ ist für eine Konzentration an Harnstoff in dem Fluid.

Abhängig von den Roh-Konzentrationskennwerten und den zugeordneten Temperaturen wird ein Gradient ermittelt und abhängig von dem Gradienten der Konzentrationskennwert ermittelt.

Auf diese Weise wird die Erkenntnis genutzt, dass die Laufzeit des Ultraschallpulses entlang der vorgegebenen Weglänge in dem Fluid sich bei Temperaturveränderungen charakteristisch für die jeweilige tatsächliche Konzentration an Harnstoff in dem Fluid verändert. Auf diese Weise kann somit die Konzentration an Harnstoff sehr zuverlässig ermittelt werden. Es wird so insbesondere vermieden, dass aufgrund identischer Schallgeschwindigkeiten bei einer einzigen vorgegebenen Temperatur von zwei verschiedenen Lösungen mit unterschiedlichem Harnstoffgehalt entsprechend fehlerhafte Interpretationen des Messergebnisses erfolgen. Auf diese Weise kann so zuverlässig beispielsweise erkannt werden, wenn das Fluid nicht die vorgegebene Konzentration an Harnstoff aufweist, die beispielsweise 32,5 % bei AdBlue® beträgt. So kann insbesondere eine Streckung mit Wasser oder auch eine erhöhte Konzentration erkannt werden oder auch gegebenenfalls erkannt werden, wenn das Fluid weitere unerwünschte Komponenten enthält, wie zum Beispiel ein Kühlmittel oder Salzwasser.

Indem abhängig von den Roh-Konzentrationskennwerten und den zugeordneten Temperaturen ein Gradient ermittelt wird und abhängig von dem Gradienten der Konzentrationskennwert ermittelt wird, kann der Konzentrationskennwert rechentechnisch besonders günstig und auch zuverlässig ermittelt werden.

Gemäß einer weiteren vorteilhaften Ausgestaltung ist der Harnstoffkonzentrationssensor zusätzlich ausgebildet und angeordnet zum Erfassen eines Fluidfüllstands in einem Fluidtank der Harnstofflösungszufuhr. Auf diese Weise kann ein einziger Sensor sowohl zum Erfassen des Fluidfüllstandes in dem Fluidtank als auch zum Ermitteln des Konzentrationskennwertes eingesetzt werden.

Gemäß einer weiteren vorteilhaften Ausgestaltung wird das Ermitteln des Konzentrationskennwertes durchgeführt in Antwort auf ein erkanntes Überschreiten eines vorgegebenen Schwellenwertes der Stickoxidkonzentration in einem Abgas stromabwärts eines SCR-Katalysators des SCR-Systems. Auf diese Weise kann das Ermitteln des Konzentrationskennwertes sehr gezielt durchgeführt werden und insbesondere auf Situationen begrenzt werden, in denen eine solche Ermittlung besonders notwendig ist im Hinblick auf eine Minimierung von Stickoxidemissionen. In diesem Zusammenhang wird auch ein Beitrag geleistet, den Energiebedarf des SCR-Systems möglichst gering zu halten, da das Aufheizen und entsprechende Erfassen mittels des Harnstoffkonzentrationssensors nur sehr selektiv erfolgen muss.

Gemäß einer weiteren vorteilhaften Ausgestaltung ist der Unterschied zwischen der ersten und zweiten Temperatur größer als eine Messungenauigkeit des Harnstoffkonzentrationssensors. In diesem Zusammenhang kann der Unterschied besonders vorteilhaft in etwa mindestens 10 °C aufweisen. Dies trägt zu einer besonders zuverlässigen Ermittlung des Konzentrationskennwertes bei.

Gemäß einer weiteren vorteilhaften Ausgestaltung ist der Harnstoffkonzentrationssensor derart angeordnet, dass der Ultraschallpuls in eine Zuführleitung der Harnstofflösungszufuhr ausgesendet wird. Auf diese Weise kann die benötigte Heizenergie zum Aufheizen der Harnstofflösung beispielsweise auch besonders gering gehalten werden, da lediglich die in der Zuführleitung durchfließende Menge an Fluid entsprechend aufgeheizt werden muss.

Ausführungsbeispiele der Erfindung sind im Folgenden anhand der schematischen Zeichnungen näher erläutert. Es zeigen:
- Figur 1: ein SCR-System mit einer Steuervorrichtung 23,
- Figur 2: Verläufe von Roh-Konzentrationskennwerten aufgetragen über die Temperatur und
- Figur 3: weitere Verläufe von Roh-Konzentrationskennwerten aufgetragen über die Temperatur.

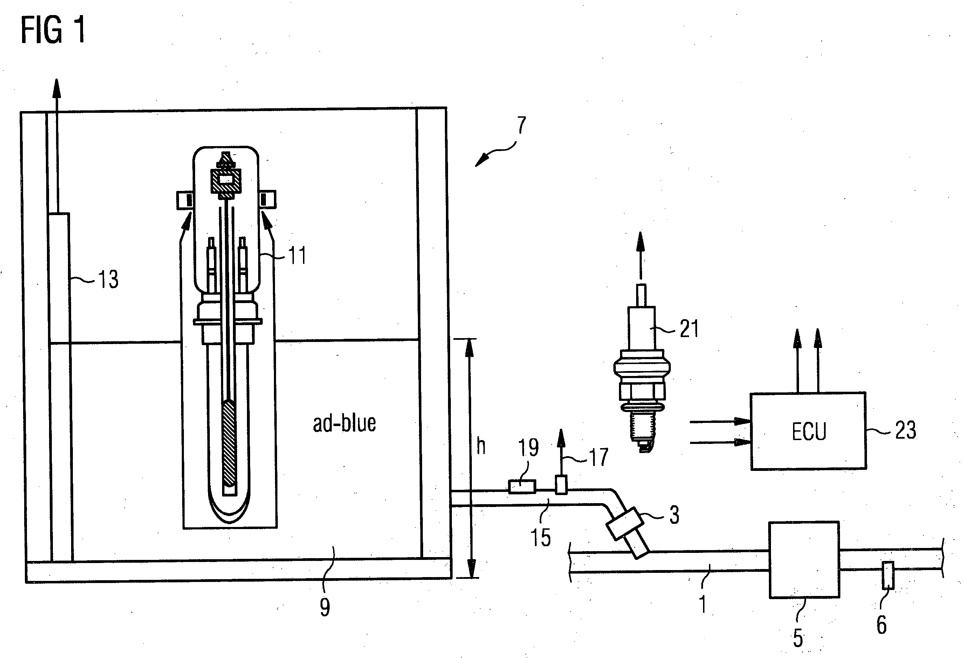

Ein SCR-System ist einer Brennkraftmaschine zugeordnet und ist insbesondere dem Abgasstrang der Brennkraftmaschine zugeordnet. Die Brennkraftmaschine ist insbesondere als Diesel-Brennkraftmaschine ausgebildet und weist in ihrem Abgastrakt einen Abgaskanal 1 (Figur 1) auf, der stromabwärts entsprechender Zylinder der Brennkraftmaschine angeordnet ist. Somit erreicht Abgas von den entsprechenden Zylindern direkt oder indirekt den Abgaskanal 1.

Zum Beispiel kann ein Abgaskatalysator stromaufwärts des in der Figur dargestellten Abgaskanals 1 angeordnet sein und/oder eine Turbine eines Abgasturboladers stromaufwärts des Abgaskanals 1 angeordnet sein. Optional kann auch ein Partikelfilter stromaufwärts des dargestellten Abgaskanals 1 angeordnet sein. Darüber hinaus können auch stromaufwärts des dargestellten Abgaskanals 1 einer oder mehrere Sensoren angeordnet sein.

Eine Dosiereinheit 3 ist an dem Abgaskanal 1 angeordnet und zwar derart, dass sie eingerichtet ist Fluid 9, das Harnstoff enthält, in den Abgaskanal 1 zuzumessen.

Stromabwärts der Dosiereinheit 3 ist ein SCR-Katalysator 5 angeordnet in dem Abgaskanal 1. Der SCR-Katalysator 5 ist ausgebildet zum Durchführen einer Reduktion von Stickoxiden zu Wasser und Stickstoff unter Zuhilfenahme von Ammoniak, der von dem Harnstoff erhalten wird.

Stromabwärts und/oder stromaufwärts des SCR-Katalysators 5 können weitere Sensoren angeordnet sein, so wie ein Stickoxidsensor oder ein Abgastemperatursensor. Beispielhaft ist in der Figur der Stickoxidsensor 6 stromabwärts des SCR-Katalysators angeordnet.

Das SCR-System umfasst ferner einen Fluidtank 7, der mit Fluid gefüllt ist, das einen vorgegebenen Anteil an Harnstoff umfassen sollte. Der Fluidtank 7 ist hydraulisch gekoppelt mit der Dosiereinheit 3, um die Dosiereinheit 3 mit Fluid aus dem Fluidtank zu versorgen. Eine Harnstofflösungszufuhr umfasst neben dem Fluidtank 7 auch eine Zuführleitung 15.

Ein Füllstand des Fluids 9 in dem Fluidtank 7 ist mit h bezeichnet. Ein Tankheizelement 11 ist in dem Fluidtank angeordnet, um thermische Energie dem Fluid 9 zuzuführen, das in dem Fluidtank 7 enthalten ist. Ferner ist ein Tankfüllstandssensor 13 vorgesehen, dessen Messsignal repräsentativ ist für den Füllstand h an Fluid 9 in dem Fluidtank 7.

Darüber hinaus ist an der Zuführleitung 15 beispielsweise ein ultraschallbasierter Harnstoffkonzentrationssensor 17 angeordnet, dessen Messsignal repräsentativ ist für eine Laufzeit eines Ultraschallpulses entlang einer vorgegebenen Weglänge in dem Fluid der Harnstofflösungszufuhr, also bei Anordnung an der Zuführleitung 15 dem Fluid in der Zuführleitung 15. Der Harnstoffkonzentrationssensor 17 kann besonders vorteilhaft auch in Baueinheit mit dem Tankfüllstandssensor 13 ausgebildet sein. Dies ist insbesondere dann vorteilhaft, wenn der Tankfüllstandssensor 13 auch ultraschallbasiert ist. In diesem Fall kann eine Mehrfachnutzung des Sensors erreicht werden.

Ferner ist bevorzugt eine Heizeinheit 19 in der Zuführleitung 15 oder an der Zuführleitung 15 angeordnet. Diese kann insbesondere zu dem Zweck vorgesehen sein, dass während des Betriebs der Brennkraftmaschine ein Einfrieren des Fluids in der Zuführleitung vermieden wird oder eingefrorenes Fluid wieder flüssig gemächt wird.

Ferner kann optional auch der ultraschallbasierte Harnstoffkonzentrationssensor 17 in einer Baueinheit auch eine Heizeinheit umfassen, mittels derer Fluid, das im Bereich des ultraschallbasierten Harnstoffkonzentrationssensors 17 strömt, entsprechend aufgeheizt werden kann.

Ferner ist eine Steuervorrichtung 23 vorgesehen, die auch als Vorrichtung zum Betreiben des SCR-Systems bezeichnet werden kann, die einen Daten- und/oder Programmspeicher umfasst und ferner einen Prozessor umfasst und ferner auch verschiedene Eingänge und Ausgänge. Entsprechende Sensoren sind den Eingängen der Steuervorrichtung zugeordnet. Solche Sensoren können zum Beispiel sein, ein Temperatursensor 21, der so angeordnet ist, dass sein Messsignal repräsentativ ist für eine Temperatur des Fluids 9 und zwar insbesondere im Bereich, in dem der ultraschallbasierte Harnstoffkonzentrationssensor 17 angeordnet ist. Als Sensoren können der Steuervorrichtung des Weiteren der Tankfüllstandssensor 13 und/oder der ultraschallbasierte Harnstoffkonzentrationssensor 17 zugeordnet sein.

Ein Programm, das in dem Programmspeicher der Steuervorrichtung 23 gespeichert ist, wird während des Betriebs des SCR-Systems abgearbeitet, und zwar insbesondere in dem Prozessor der Steuervorrichtung 23. Darüber hinaus sind den Ausgängen der Steuervorrichtung 23 verschiedene Aktoren zugeordnet, die beispielsweise die Dosiereinheit 3 und/oder das Tankheizelement 11 und/oder die Heizeinheit 19 umfassen können. Sie können jedoch grundsätzlich auch weitere Aktoren umfassen, wie beispielsweise ein Einspritzventil zum Zumessen von Kraftstoff.

Ein Programm wird beispielsweise zeitnah zu einem Start der Brennkraftmaschine gestartet. Das Programm kann optional prüfen, ob ein vorgegebener Schwellenwert der Stickoxidkonzentration in dem Abgas stromabwärts des SCR-Katalysators 5 überschritten worden ist. Zu diesem Zweck kann beispielsweise das Messsignal des Stickoxidsensors 6 herangezogen werden. Falls dies der Fall ist, so wird zumindest das Fluid in einem Erfassungsbereich des Harnstoffkonzentrationssensors 17 von einer vorgegebenen ersten Temperatur auf eine vorgegebene zweite Temperatur aufgeheizt. Dies kann je nach Anordnung des ultraschallbasierten Harnstoffkonzentrationssensors 17 beispielsweise mittels entsprechender Ansteuerung der Heizeinheit in Baueinheit mit dem ultraschallbasierten Harnstoffkonzentrationssensor 17 und/oder der Heizeinheit 19 und/oder dem Tankheizelement 11 erfolgen.

Während des Aufheizens wird bei zumindest einer dritten und vierten Temperatur das Messsignal des ultraschallbasierten Harnstoffkonzentrationssensors 17 erfasst und jeweils ein Roh-Konzentrationskennwert abhängig von dem jeweiligen Messsignal ermittelt, der repräsentativ ist für die Laufzeit des Ultraschallpulses. So können zumindest zwei solche Roh-Konzentrationskennwerte aber auch eine beliebige höhere Anzahl ermittelt werden. Insbesondere im Falle des Ermittelns lediglich zweier Roh-Konzentrationskennwerte ist es besonders vorteilhaft, wenn die dritte und vierte Temperatur in etwa der ersten beziehungsweise zweiten Temperatur entspricht. Der Roh-Konzentrationskennwert kann beispielsweise die Laufzeit selbst sein oder beispielsweise ein Konzentrationswert, so beispielsweise als Prozentwert.

Abhängig von den Roh-Konzentrationskennwerten wird ein Konzentrationskennwert ermittelt, der repräsentativ ist für eine Konzentration an Harnstoff in dem Fluid.

Dies kann optional erfolgen, in dem abhängig von den Roh-Konzentrationskennwerten und den zugeordneten Temperaturen ein Gradient ermittelt wird und abhängig von dem Gradienten der Konzentrationskennwert ermittelt wird.

Besonders vorteilhaft ist es, wenn der Unterschied zwischen der ersten und zweiten Temperatur größer ist als eine Messungenauigkeit des ultraschallbasierten Harnstoffkonzentrationssensors 17. Dies kann beispielsweise eine Temperaturdifferenz von mindestens 10 °C sein.

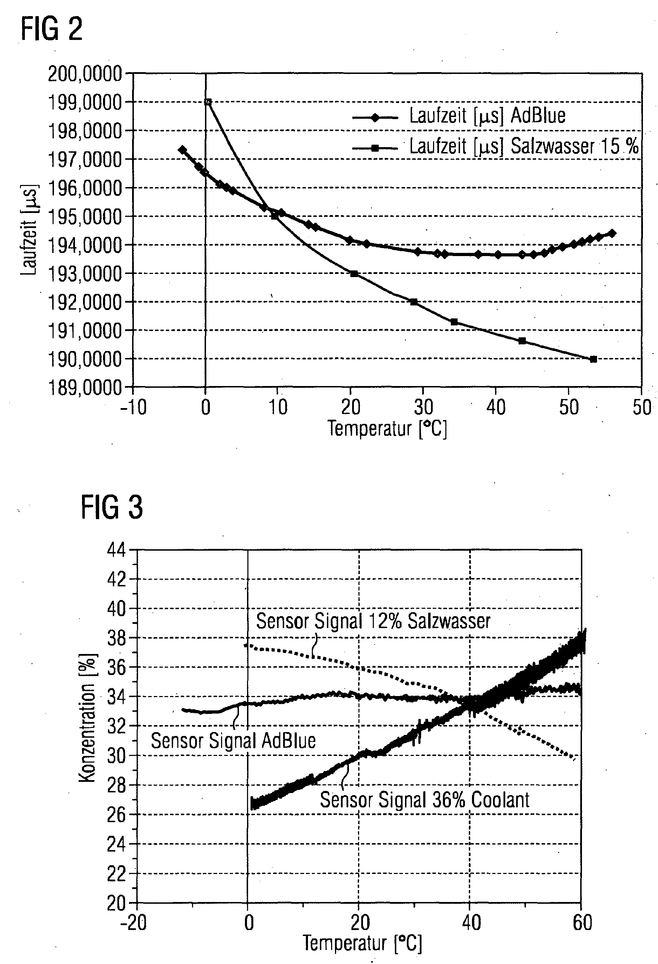

In den Figuren 2 und 3 sind Verläufe des Roh-Konzentrationskennwertes für verschiedene Fluide aufgetragen über die Temperatur.

## Patentansprüche

1. Verfahren zum Betreiben eines SCR-Systems mit einer Harnstofflösungszufuhr und mit einem ultraschällbasierten Harnstoffkonzentrationssensor (17), dessen Messsignal repräsentativ ist für eine Laufzeit eines Ultraschallpulses entlang einer vorgegebenen Weglänge in einem Fluid (9) der Harnstofflösungszufuhr, **dadurch gekennzeichnet, dass**
- zumindest das Fluid (9) in einem Erfassungsbereich des Harnstoffkonzentrationssensors (17) von einer vorgegebenen ersten Temperatur auf eine vorgegebene zweite Temperatur aufgeheizt wird,
- während des Aufheizens bei zumindest einer dritten und vierten Temperatur das Messsignal erfasst wird und jeweils ein Roh-Konzentrationskennwert abhängig von dem jeweiligen Messsignal ermittelt wird, der repräsentativ ist für die Laufzeit des Ultraschallpulses,
- abhängig von den Roh-Konzentrationskennwerten ein Konzentrationskennwert ermittelt wird, der repräsentativ ist für eine Konzentration an Harnstoff in dem Fluid (9),
- wobei abhängig von den Roh-Konzentrationskennwerten und den zugeordneten Temperaturen ein Gradient ermittelt wird und abhängig von dem Gradienten der Konzentrationskennwert ermittelt wird.

2. Verfahren nach Anspruch 1,
bei dem der Harnstoffkonzentrationssensor (17) zusätzlich ausgebildet und angeordnet ist zum Erfassen eines Fluidfüllstands in einem Fluidtank (7) der Harnstofflösungszufuhr.

3. Verfahren nach einem der vorstehenden Ansprüche,
bei dem das Ermitteln des Konzentrationskennwertes durchgeführt wird in Antwort auf ein erkanntes Überschreiten eines vorgegebenen Schwellenwertes der Stickoxidkonzentration in einem Abgas stromabwärts eines SCR-Katalysators (5) des SCR-Systems.

4. Verfahren nach einem der vorstehenden Ansprüche,
bei dem der Unterschied zwischen der ersten und zweiten Temperatur größer ist als eine Messungenauigkeit des Harnstoffkonzentrationssensors (17).

5. Verfahren nach einem der vorstehenden Ansprüche,
bei dem der Unterschied zwischen der ersten und zweiten Temperatur in etwa mindestens 10 °C aufweist.

6. Verfahren nach einem der vorstehenden Ansprüche,
bei dem der Harnstoffkonzentrationssensor (17) derart angeordnet ist, dass der Ultraschallpuls in eine Zuführleitung (15) der Harnstofflösungszufuhr ausgesendet wird.

7. Vorrichtung zum Betreiben eines SCR-Systems mit einer Harnstofflösungszufuhr und mit einem ultraschallbasierten Harnstoffkonzentrationssensor, dessen Messsignal repräsentativ ist für eine Laufzeit eines Ultraschallpulses entlang einer vorgegebenen Weglänge in einem Fluid (9)der Harnstofflösungszufuhr, wobei die Vorrichtung **dadurch gekennzeichnet ist, dass** sie dazu ausgebildet ist,
- zumindest das Fluid (9) in einem Erfassungsbereich des Harnstoffkonzentrationssensors (17) von einer vorgegebenen ersten Temperatur auf eine vorgegebene zweite Temperatur aufzuheizen,
- während des Aufheizens bei zumindest einer dritten und vierten Temperatur das Messsignal zu erfassen und jeweils einen Roh-Konzentrationskennwert abhängig von dem jeweiligen Messsignal zu ermitteln, der repräsentativ ist für die Laufzeit des Ultraschallpulses,
- abhängig von den Roh-Konzentrationskennwerten einen Konzentrationskennwert zu ermitteln, der repräsentativ ist für eine Konzentration an Harnstoff in dem Fluid (9),
- abhängig von den Roh-Konzentrationskennwerten und den zugeordneten Temperaturen einen Gradienten zu ermitteln und abhängig von dem Gradienten den Konzentrationskennwert zu ermitteln.

## Claims

1. Method for operating an SCR system having a urea solution supply and having an ultrasound-based urea concentration sensor (17), the measurement signal of which is representative of a propagation time of an ultrasonic pulse along a predefined path length in a fluid (9) of the urea solution supply, **characterized in that**
- at least the fluid (9) in a detection region of the urea concentration sensor (17) is heated from a predefined first temperature to a predefined second temperature,
- during the heating the measurement signal is detected at at least a third and fourth temperature, and in each case a raw concentration characteristic value is determined as a function of the respective measurement signal, which value is representative of the propagation time of the ultrasonic pulse,
- a concentration characteristic value, which is representative of a concentration of urea in the fluid (9), is determined as a function of the raw concentration characteristic values,
- wherein a gradient is determined as a function of the raw concentration characteristic values and the assigned temperatures, and the concentration characteristic value is determined as a function of the gradient.

2. Method according to Claim 1,
in which the urea concentration sensor (17) is additionally designed and arranged to detect a fluid filling level in a fluid tank (7) of the urea solution supply (5).

3. Method according to one of the preceding claims,
in which the determination of the concentration characteristic value is carried out in response to detection that a predefined threshold value of the nitrogen oxide concentration in an exhaust gas downstream of an SCR catalytic converter (5) of the SCR system is exceeded.

4. Method according to one of the preceding claims, in which the difference between the first and second temperatures is greater than a measuring inaccuracy of the urea concentration sensor (17).

5. Method according to one of the preceding claims, in which the difference between the first and second temperatures is approximately at least 10°C.

6. Method according to one of the preceding claims,
in which the urea concentration sensor (17) is arranged in such a way that the ultrasonic pulse is emitted into a feed line (15) of the urea solution supply.

7. Device for operating an SCR system having a urea solution supply and having an ultrasound-based urea concentration sensor, the measurement signal of which is representative of a propagation time of an ultrasonic pulse along a predefined path length in a fluid (9) of the urea solution supply, wherein the device is **characterized in that** it is designed
- to heat at least the fluid (9) in a detection region of the urea concentration sensor (17) from a predefined first temperature to a predefined second temperature,
- to detect the measurement signal during the heating at at least a third and fourth temperature and in each case to determine a raw concentration characteristic value, as a function of the respective measurement signal, which value is representative of the propagation time of the ultrasonic pulse,
- to determine a concentration characteristic value, which is representative of a concentration of urea in the fluid (9), as a function of the raw concentration characteristic values,
- to determine a gradient as a function of the raw concentration characteristic values and the assigned temperatures, and to determine the concentration characteristic value as a function of the gradient.

## Revendications

1. Procédé pour faire fonctionner un système SCR ayant une amenée d'une solution d'urée et un capteur (17) de la concentration d'urée, qui repose sur les ultrasons et dont le signal de mesure est représentatif du temps que met une impulsion d'ultrasons à parcourir une longueur de trajet donnée à l'avance dans un fluide (9) de l'amenée de la solution d'urée, **caractérisé en ce que**
- on chauffe au moins le fluide dans une partie de détection du capteur (17) de la concentration d'urée d'une première température donnée à l'avance à une deuxième température donnée à l'avance,
- pendant le chauffage, on détecte le signal de mesure à au moins une troisième et une quatrième températures et on détecte respectivement une valeur caractéristique de la concentration brute en fonction du signal de mesure respectif, qui est représentatif du temps de parcours de l'impulsion d'ultrasons,
- à partir des valeurs caractéristiques de la concentration brute, on détermine une valeur caractéristique de la concentration, qui est représentative d'une concentration d'urée dans le fluide (9),
- dans lequel, à partir des valeurs de la concentration brute et des températures associées, on détermine un gradient et, en fonction du gradient, on détermine la valeur caractéristique de la concentration.

2. Procédé suivant la revendication 1,
dans lequel le capteur (17) de la concentration d'urée est, en outre, constitué et disposé de manière à détecter un niveau de fluide dans un réservoir (7) à fluide de l'amenée de la solution d'urée.

3. Procédé suivant l'une des revendications précédentes,
dans lequel on effectue la détermination de la valeur caractéristique de la concentration en réponse à la reconnaissance d'un dépassement d'une valeur de seuil donnée à l'avance de la concentration d'oxyde d'azote dans un gaz d'échappement en aval d'un catalyseur (5) SCR du système SCR.

4. Procédé suivant l'une des revendications précédentes,
dans lequel la différence entre la première et la deuxième températures est plus grande qu'une précision de mesure du capteur (17) de la concentration d'urée.

5. Procédé suivant l'une des revendications précédentes,
dans lequel la différence entre la première et la deuxième températures est à peu près d'au moins 10°C.

6. Procédé suivant l'une des revendications précédentes,
dans lequel le capteur (17) de la concentration de l'urée est disposé de manière à ce que l'impulsion d'ultrasons soit émise dans un conduit (15) de l'amenée de la solution d'urée.

7. Dispositif pour faire fonctionner un système SCR ayant une amenée de solution d'urée et un capteur de la concentration d'urée, qui repose sur les ultrasons et dont le signal de mesure est représentatif du temps que met une impulsion d'ultrasons à parcourir une longueur de trajet donnée à l'avance dans un fluide (9) de l'amenée de la solution d'urée, le dispositif étant **caractérisé en ce qu'**il est constitué pour
- chauffer au moins le fluide (9) dans une partie de détection du capteur (17) de la concentration d'urée d'une première température donnée à l'avance à une deuxième température donnée à l'avance,
- détecter, pendant le chauffage, le signal de mesure à au moins une troisième et une quatrième températures et déterminer respectivement une valeur caractéristique de la concentration brute en fonction du signal de mesure respectif, qui est représentatif du temps de parcours de l'impulsion d'ultrasons,
- déterminer, en fonction des valeurs caractéristiques de la concentration brute, une valeur caractéristique de la concentration, qui est représentative d'une concentration de l'urée dans le fluide (9),
- déterminer un gradient en fonction des valeurs caractéristiques de la concentration brute et des températures associées et déterminer la valeur caractéristique de la concentration en fonction du gradient.
